## Europäisches Patentamt

## European Patent Office

## Office européen des brevets

(19)

(11) Veröffentlichungsnummer: **0 152 548**
**B1**

(12) # EUROPÄISCHE PATENTSCHRIFT

(45) Veröffentlichungstag der Patentschrift:
02.09.87

(51) Int. Cl.⁴: **G 03 B 27/60**

(21) Anmeldenummer: **84113607.0**

(22) Anmeldetag: **10.11.84**

(54) Vorrichtung zum automatischen Aufspannen von Filmmaterial auf einer Saugplatte.

(30) Priorität: **21.02.84 DE 3406132**

(43) Veröffentlichungstag der Anmeldung:
**28.08.85 Patentblatt 85/35**

(45) Bekanntmachung des Hinweises auf die Patenterteilung:
**02.09.87 Patentblatt 87/36**

(84) Benannte Vertragsstaaten:
**AT BE CH DE FR GB IT LI NL SE**

(56) Entgegenhaltungen:
**US-A-2 799 204**
**US-A-3 617 127**
**US-A-3 674 367**
**US-A-3 779 643**
**US-A-3 992 089**

(73) Patentinhaber: **DR.- ING. RUDOLF HELL GmbH,
Grenzstrasse 1-5, D-2300 Kiel 14 (DE)**

(72) Erfinder: **Penza, Hans, Matthias- Claudius- Strasse
30, D-2308 Preetz (DE)**
Erfinder: **Schmuck, Karl- Wilhelm, Schneiderkamp
17a, D-2300 Kiel (DE)**
Erfinder: **Lindemann, Eckhard, Preetzer Strasse 28,
D-2313 Raisdorf (DE)**
Erfinder: **Segler, Siegfried, Neuwührener Weg 10,
D-2313 Raisdorf (DE)**
Erfinder: **Asbach, Dietrich, Schulstrasse 9, D-2300
Klausdorf (DE)**

EP 0 152 548 B1

## Beschreibung

Bei der Belichtung von Filmmaterial in einer Belichtungsstation ist es durch die US-A-3,617,127 bekannt, daß das Filmmaterial von einer planen Saugplatte festgehalten wird. Das Filmmaterial wird von einer Vorratskassette, in der es auf einer Rolle aufgewickelt ist, über die Saugplatte in eine Aufnahmekassette transportiert, wobei es in der Aufnahmekassette auf eine von einem Motor angetriebenen Aufnahmerolle aufgewickelt wird. Die Saugplatte besitzt mehrere in zusammenhängenden ineinander verschachtelten Rechtecken angeordnete Sauglöcher, die je nach verwendetem Filmformat aktiviert werden. Diese Aufspannung durch einfaches Ansaugen ist aber für Anwendungsfälle, in denen es auf hohe Genauigkeit ankommt oder auch in denen die Saugplatte mechanisch bewegt wird, z. B. reversierend, nicht ausreichend, da das Filmmaterial nicht fest genug gehalten wird und Falten auftreten können. Auch ist, um das Material überhaupt fest zu halten, eine erhebliche Saugleistung erforderlich, ohne daß sich insgesamt eine sehr genaue Positionierung des Materials auf der Saugplatte ergibt. Außerdem soll Filmmaterial verschiedener Breite auf die Saugplatte aufgespannt werden, was ein pneumatisches Umschalten der Sauglöcher der Saugplatte erfordert.

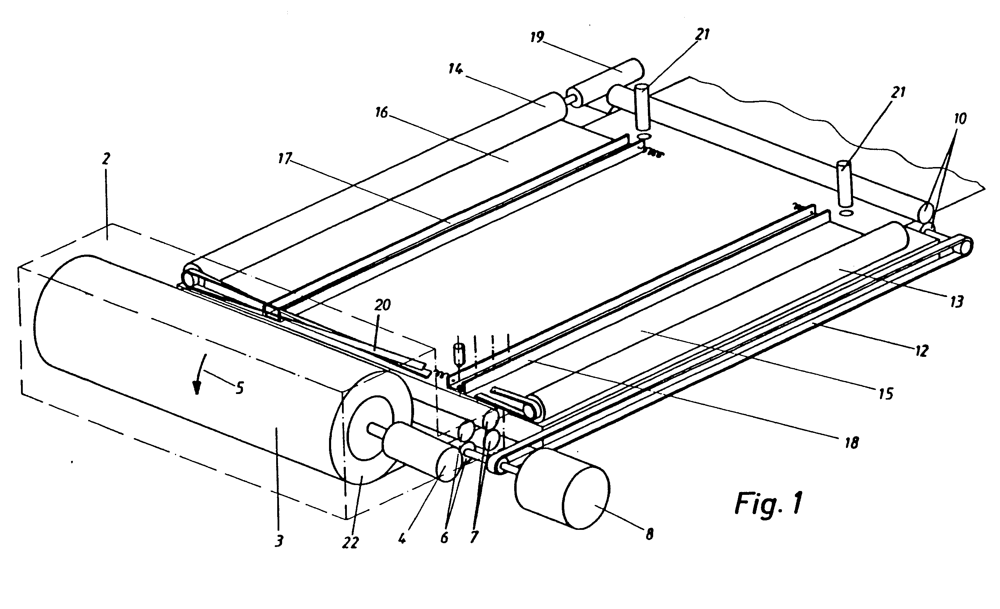

Der vorliegenden Erfindung liegt daher die Aufgabe zugrunde, eine Vorrichtung zum automatischen Aufspannen von Filmmaterial auf eine Saugplatte zu schaffen, mit der gegenüber der einfachen Ansaugung des Filmmaterials durch die Saugplatte eine genaue Positionierung und eine faltenfreie Aufspannung gewährleistet wird. Diese Aufgabe wird gemäß dem kennzeichnenden Teil des Anspruchs 1 gelöst. Vorteilhafte Weiterbildungen der Erfindung sind in den abhängigen Ansprüchen 2 - 10 angegeben. Die Erfindung wird im folgenden anhand der Figuren 1 bis 3 näher erläutert.

Es zeigen:

Fig. 1 eine perspektivische Ansicht der Aufspannvorrichtungen,

Fig. 2 eine Darstellung der Lichtschranken zur Erfassung der Filmbreite und

Fig. 3 eine perspektivische Ansicht einer weiteren Ausführungsform der Erfindung.

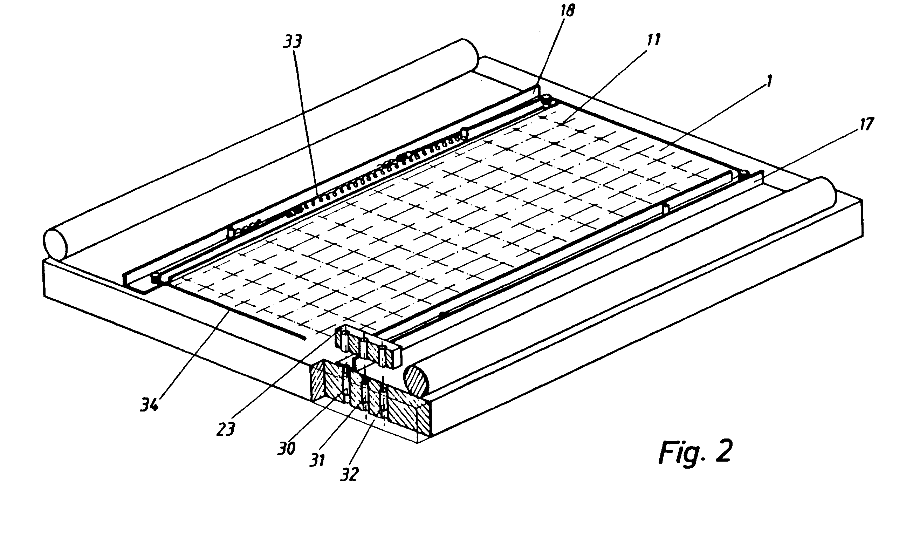

Fig. 1 zeigt eine Aufspannvorrichtung mit einer Saugplatte 1, die mit mehreren Reihen von Sauglöchern 11 versehen und in Figur 2 näher dargestellt ist. An einem Ende der Saugplatte 1 ist eine Filmkassette 2 angeordnet, die aus einem gestrichelt gezeichneten lichtdichten Gehäuse und einer Rolle 22, welche das Filmmaterial 3 aufnimmt, besteht. Die Rolle 22 wird von einem Motor 4 angetrieben, und das Filmmaterial 3 läuft in Pfeilrichtung 5 aus der Kassette und wird auf die Saugplatte 1 geschoben. Hierzu dienen weiterhin zwei Rollenpaare 6 und 7, die an der Stirnseite der Saugplatte 1 innerhalb der Kassette 2 angeordnet sind. Das Rollenpaar 6 wird ebenfalls von einem Motor angetrieben. Die Motoren 4 und 8 können sich in beiden Richtungen drehen, so daß sowohl ein Vor- als auch ein Rücktransport des Filmmaterials möglich ist. Das Rollenpaar 7 zwischen dem Rollenpaar 6 und der Stirnseite der Platte 1 dient innerhalb der Kassette als zusätzliche Lichtsperre für die Kassette 2 und als zusätzliche Führung für das Filmmaterial 3. Am anderen Stirnende der Saugplatte 1 ist weiterhin ein Rollenpaar 10, vorgesehen, das von dem Motor 8 über einen Zahnriemen 12 angetrieben wird. Die Übersetzung zwischen dem Rollenpaar 10 und dem Rollenpaar 6 ist so gewählt, daß das Rollenpaar 10 sich etwas schneller dreht als das Rollenpaar 6, damit eine Zugspannung auf das Filmmaterial ausgeübt wird.

Der Andruck der beiden Rollen des Rollenpaares 10 ist nicht so groß wie der Andruck des Rollenpaares 6, damit eine Friktion auftreten kann. Eine der Rollen des Rollenpaars 10 kann z. B. eine Filzrolle sein oder mit einem weichen Stoff bespannt sein, damit der Film nicht verkratzt wird. Vorzugsweise wird ein Material verwendet, das eine statische Aufladung verhindert.

Die Saugplatte selbst weist eine Vielzahl von Sauglöchern auf, wie sie z. B. in der DE-OS 31 20 172 (DE 31 20 172 Al) beschrieben sind. Es ist aber auch eine geordnete Anordnung der Sauglöcher möglich, z. B. in Reihen oder Rechtecken.

Auf der Saugplatte sind an den Seitenenden über die ganze Länge der Platte zwei Rollen 13 und 14 angeordnet, auf denen ein Tuch 15 bzw. 16 oder eine Folie aufgewickelt ist. Die Folie hat eine Breite, die der Länge der Rollen bzw. der Saugplatte selbst entspricht. Die Länge des Tuchs oder der Folie ist so gewählt, daß in abgewickeltem Zustand die Saugplatte völlig bedeckt wird, so daß diese Anordnung wie zwei Jalousien wirkt. An dem Ende des Tuchs oder der Folie sind zwei Schienen 17 und 18 befestigt, die im ausgezogenen Zustand der Jalousie als Anschlag wirken. Ihr Gewicht bewirkt eine Beschwerung des Filmmaterials, was zu einer besseren Auflage des Materials auf der Saugplatte führt. Eine der Rollen 13 oder 14, im Beispiel der Figur 1 die Rolle 14, wird von einem Motor 19 angetrieben. Die zweite Rolle, im Beipiel die Rolle 13, wird über einen gekreuzten Zahnriemen 20 angetrieben. Die beiden Schienen 17 und 18 sind mittels Federn gegeneinander verspannt und können mittels des Motors 19 auseinandergezogen werden. Um zu verhindern, daß die Federn die Jalousie wieder zuziehen, kann der Motor 19 über ein selbsthemmendes Getriebe arbeiten oder er wird mit einer Bremse versehen. Die Arbeitsweise der Aufspannvorrichtung wird im folgenden näher beschrieben.

Wie bereits erwähnt, wird das Filmmaterial 3 durch die Rollenpaare 6 und 7 auf die Platte 1 geschoben. Während dieses Vorganges ist die Jalousie geschlossen, d. h., die Schienen 17 und 18 berühren sich. Da das Filmmaterial von einer Rolle abgewickelt wird, hat es eine Krümmung und würde sich normalerweise ohne die Jalousie nach oben wölben und nicht auf der Saugplatte anliegen. Da aber die Jalousie geschlossen ist, entsteht ein Schlitz, in den das Material eingeführt wird, und es ist gewährleistet, daß es glatt unter den Schienen und dem Tuch durchgeschoben und am anderen Ende vom Rollenpaar 10 erfaßt wird. Nachdem das Filmmaterial von dem Rollenpaar 10 erfaßt worden ist, wird eine Stanze betätigt, die aus den Stanzelementen 21 besteht, welche Registerlöcher in das Filmmaterial einstanzen. Hierdurch ist gewährleistet, daß das Material exakt in dieser Position verbleibt und später für die Weiterverarbeitung wieder registergenau aufgespannt werden kann.

Hinter den Rollenpaaren 6 und 7 sind auf der Saugplatte an der Stirnseite der Platte mehrere Lichtschranken 23 angeordnet, mit deren Hilfe beim Einlaufen des Filmmaterials von der Kassette die jeweilige Breite des Filmmaterials detektiert wird. Abhängig von diesem Wert wird nach dem Einlaufen und Stanzen des Filmmaterials der Motor 19 betätigt, und die Jalousie wird soweit auseinandergezogen, bis die Schienen 17 und 18 gerade noch den Rand des Filmmaterials bedecken. Hierdurch wird erreicht, daß das Filmmaterial am Rand durch die Schienen niedergedrückt wird und eine Wölbung des Filmmaterials, die durch vorheriges Aufwickeln auf der Rolle 22 entstanden ist, beseitigt wird. Zum anderen werden gegenüber einer Saugplatte ohne Jalousien die Sauglöcher, die seitlich des Filmmaterials liegen und normalerweise offenbleiben würden, abgedeckt, so daß sich die volle Saugleistung der Saugplatte entfalten kann. Es hat sich gezeigt, daß besonders bei großformatigen Filmen diese Art der Aufspannung wesentlich sicherer ist und daß auch die Positionsgenauigkeit gegenüber der einfachen Ansaugung wesentlich größer ist, da die Stanznadeln nach dem Stanzen der Registerlöcher in der Stanzstellung verbleiben und somit in Verbindung mit der Jalousie jegliches Verrutschen des Filmmaterials auch bei reversierender Bewegung der Saugplatte verhindert wird.

In Figur 2 ist die Lichtschranke 23 im Detail näher dargestellt. Es sind drei Teilstrahlen 30, 31 und 32 vorhanden, die je nach Breite des Filmmaterials abgedeckt werden. In der Saugplatte 1 sind Sauglöcher 11 vorgesehen. Weiterhin ist in Figur 2 eine Feder 33 dargestellt, mittels der die Schienen 17 und 18 über einen Seilzug 34 verspannt sind.

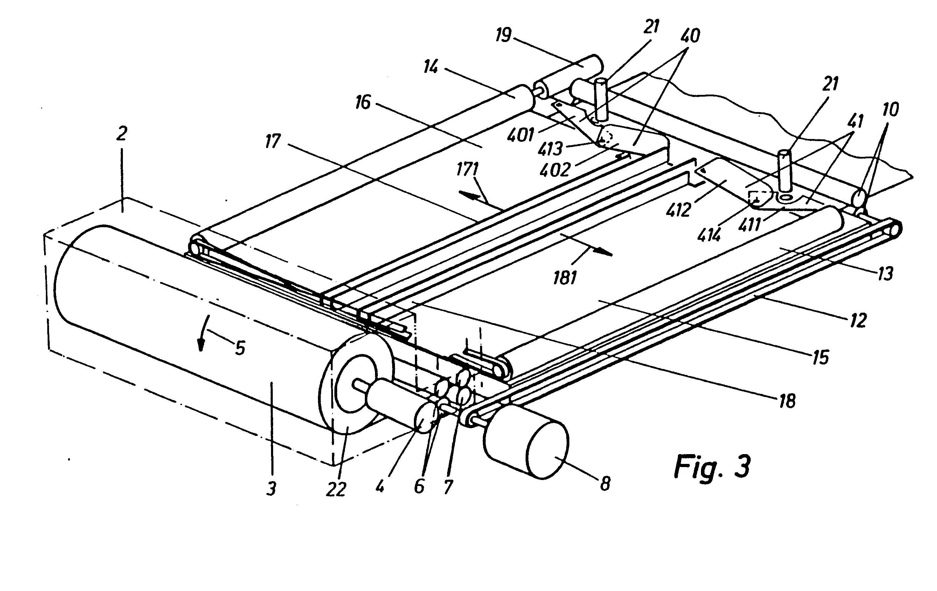

In Figur 3 ist zusätzlich zur Ausführungsform gemäß Figur 1 am Ende der Schienen 17 und 18 und an den Ecken der Saugplatte 1 jeweils auf dem Tuch 15 bzw. 16 flach liegend eine scherenartige Blechkonstruktion 40 bzw. 41 vorgesehen, die aus zwei Blechteilen 401, 402 bzw. 411, 412 bestehen. Die Bleche 401, 402 bzw. 411, 412 bilden ein scherenartiges Gelenk, in dem sie an zwei Enden in einem gemeinsamen Drehpunkt 413 bzw. 414 aneinander angelenkt sind. Die freien Enden der Bleche 401, 402 bzw. 411, 412 sind ebenfalls drehbar gelagert und zwar je ein Blech 401 und 411 an den Ecken der Saugplatte und ein Blech 402 und 412 an der Schiene 17 bzw. 18. Bewegen sich die Schienen 17 und 18 in Pfeilrichtung 171 und 181, so verschieben sich die Drehpunkte 413 und 414 auf dem Tuch, auf dem die Bleche aufliegen, in Richtung der Kassette 2. Befinden sich die Schienen 17 und 18 in der gezeichneten Lage, so drücken die beiden Blechkonstruktionen 40 und 41 die Tücher 15 und 16 vor dem Walzenpaar 10 auf die Saugplatte nieder, so daß das Filmmaterial die Tücher nicht anheben kann. Zusätzlich bilden sie eine verlängerte Führung für das Filmmaterial in Richtung der Walzen 10, so daß das Filmmaterial nicht vor den Rollen 10 nach oben ausweichen kann.

## Patentansprüche

1. Vorrichtung zum automatischen Aufspannen von Filmmaterial (3) aus einer Kassette (2) auf eine Saugplatte (1), dadurch gekennzeichnet, daß an zwei gegenüberliegenden Enden der Saugplatte (1) jeweils Paare von zusammenarbeitenden Transportwalzen (6, 7, 10) vorgesehen sind, von denen ein Paar (6) das Filmmaterial in der Kassette (2) aufnimmt und auf die Saugplatte (1) schiebt, ein Paar (10) das Filmmaterial von der Saugplatte (1) aufnimmt und spannt bzw. weitertransportiert, wobei das Walzenpaar (10), das den Film spannt, schneller angetrieben ist als das Walzenpaar (6), das den Film aufnimmt und weiterschiebt, daß an den beiden anderen Enden der Saugplatte jeweils eine sich über die ganze Seite erstreckende Rolle (13, 14) vorgesehen ist, auf die ein Tuch (15 bzw. 16) oder dergleichen aufwickelbar ist, wobei Rolle und Tuch so angeordnet sind, daß sie jeweils eine die Saugplatte halb bedeckende Jalousie bilden, daß an den Enden des Tuchs, die im abgewickelten Zustand in der Mitte der Saugplatte zusammenstoßen, jeweils eine Schiene (17 bzw. 18) befestigt ist, die mit der anderen Schiene mittels einer Zugfeder (33) verspannt ist, daß die Rollen (13 und 14) jeweils einen Antrieb haben, der der Kraft der Zugfeder (33) entgegenwirkt.

2. Vorrichtung nach Anspruch 1, dadurch gekennzeichnet, daß eine die Breite des Filmmaterials ermittelnde Meßvorrichtung (23) vorgesehen ist, die mit dem Antrieb der Rollen verbunden ist, wobei beim Einlaufen des Filmmaterials die Jalousie geschlossen ist und nach dem Einlaufen des Filmmaterials die Jalousie mittels der Meßeinrichtung soweit geöffnet wird, daß die Schienen den Rand des Filmmaterials bedecken.

3. Vorrichtung nach Anspruch 1, dadurch gekennzeichet, daß an einem der Enden der Saugplatte, an welchem die Rollen (10), welche das Filmmaterial spannen und weitertransportieren, angeordnet sind, eine Stanzvorrichtung (21) zum Erzeugen einer Registerlochung des Films vorgesehen ist, wobei die Stanzstempel der Stanzvorrichtung während der Belichtung des Films in den Stanzlöchern verbleiben.

4. Vorrichtung nach Anspruch 1, dadurch gekennzeichnet, daß innerhalb der Kassette zwischen dem Walzenpaar, das das Filmmaterial von der Kassette aufnimmt und auf die Saugplatte schiebt, ein weiteres nicht angetriebenes Walzenpaar (7) vorgesehen ist.

5. Vorrichtung nach einem der Ansprüche 1 bis 4, dadurch gekennzeichnet, daß die angetriebene Walze des Walzenpaares (10), das das Filmmaterial spannt und weitertransportiert, als Bürste aus Samt ausgebildet ist.

6. Vorrichtung nach Anspruch 5, dadurch gekennzeichnet, daß die Bürstenwalze eine antistatische Oberfläche aufweist.

7. Vorrichtung nach einem der Ansprüche 1 - 6, dadurch gekennzeichnet, daß der Antrieb für die Rollen (13, 14), die das Tuch (15 bzw. 16) auf- oder abwickeln, selbsthemmend ausgebildet ist.

8. Vorrichtung nach Anspruch 1 und 4, dadurch gekennzeichnet, daß das angetriebene Walzenpaar (6), welches das Filmmaterial aufnimmt und weiterschiebt und das nicht angetriebene Walzenpaar (7), welches das Filmmaterial vom angetriebenen Walzenpaar zur Saugplatte (1) weiterleitet, innerhalb der Kassette vor dem Ausgang der Kassette angeordnet sind.

9. Vorrichtung nach Anspruch 1, dadurch gekennzeichnet, daß auf den Tüchern (15 und 16) am Stirnende der Saugplatte (1) am Ende der Tücher jeweils zwei aneinander angelenkte, scherenartig wirkende Blechteile (401, 402) bzw. (411, 412) flach aufliegen, von denen eines mit seinem freien Ende am Ende einer der beiden Schienen (17 und 18) und das andere mit seinem freien Ende an der jeweiligen Ecke der Saugplatte angelenkt sind.

10. Vorrichtung nach Anspruch 9, dadurch gekennzeichnet, daß jeweils eines der beiden Bleche (401 und 411) eine Ausnehmung für die Stanzvorrichtung (21) aufweist.

**Claims**

1. Device for automatic mounting of film material (3) from a cassette (2) on to a suction plate (1), characterized in that pairs of cooperating conveying rollers (6, 7, 10) are provided in each case at two mutually opposed extremities of the suction plate (1), of which one pair (6) picks up the film material in the cassette (2) and thrusts it on to the suction plate (1), one pair (10) picks up the film material on the suction plate (1) and tensions it or conveys it further, the pair of rollers (10) which tensions the film being driven more rapidly then the pair of rollers (6) which picks up the film and pushes it onwards, that a roller (13,14) is provided on each of the two other edges of the suction plate extending along the whole side in each case, on to which can be wound a cloth (15, 16, resp.) or the like, the roller and cloth being so arranged that they form a blind half covering the suction plate in each case, that a rail (17, 18, resp.) is secured to each of the cloth edges which in the unwound state meet one another at the middle of the suction plate, which rails are biased towards one another by means of a tension spring (33), that the rollers (13 and 14) each have a drive, which acts against the force of the tension spring (33).

2. Device according to claim 1, characterized in that a measuring device (23) determining the width of the film material is provided, which is coupled to the drive for the rollers, the blind being closed during the infeed of the film material and the blind being opened by means of the measuring system after the infeed of the film material, to an extent such that the rails cover the edges of the film material.

3. Device according to claim 1, characterized in that a punching device (21) for production of a locating perforation of the film is provided at one of the extremities of the suction plate at which are situated the rollers (10) which tension the film material and convey it further, the punching plungers of the punching device remaining in the punched holes during the exposure of the film.

4. Device according to claim 1, characterized in that further, idle pair of rollers (7) is provided within the cassette between the pair of rollers which picks up the film material from the cassette and thrusts the same on to the suction plate.

5. Device according to one of the claims 1 to 4, characterized in that the driven roller of the pair of rollers (10) which tensions the film material and conveys it further is constructed as a velvet brush.

6. Device according to claim 5, characterized in that the brush roller has an antistatic surface.

7. Device according to one of the claims 1 to 6, characterized in that the drive for the rollers (13,14) which wind up or unwind the cloth (15,16, resp.) is self-arresting.

8. Device according to claims 1 and 4, characterized in that the driven pair of rollers (6) which picks up the film material and thrusts it onwards, and the pair of idle rollers (7) which guides the film material onwards from the driven pair of rollers to the suction plate (1), are situated within the cassette and before the outlet from the cassette.

9. Device according to claim 1, characterized in that two sheet metal members (401,402) and (411, 412) which are respectively articulated to each other and act in the manner of shears at the extremity of the cloths, lie flat on the cloths (15 and 16) at the forward end of the suction plate (1) in each case, of which one has its free extremity articulated to the extremity of one of the two rails (17 and 18) and the other has its free extremity articulated to the corresponding corner of the suction plate.

10. Device according to claim 9, characterized in that one of the two sheet metal members (401 and 411) in each case has a recess for the punching device (21).

**Revendications**

1. Dispositif pour tendre automatiquement un matériau en film (3) en provenance d'une cassette (2) sur une plaque d'aspiration (1), dispositif caractérisé en ce que :
- à deux extrémités opposées de la plaque d'aspiration (1), il est respectivement prévu des paires de cylindres de transport coopérant entre eux (6, 7, 10), l'une (6) de ces paires prélevant le matériau en film sur la cassette (2) et le poussant sur la plaque d'aspiration (1), tandis qu'une paire (10) prélève le matériau en film à partir de la plaque d'aspiration (1) et le tend en le transportant éventuellement plus loin, la paire de cylindres (10) qui tend le film est entraîné plus rapidement que la paire de cylindres (6) qui prélève le film et le pousse plus loin,
- aux deux autres extrémités de la plaque d'aspiration, il est respectivement prévu un rouleau (13, 14) s'étendant sur la totalité du côté de la plaque, et sur lequel est susceptible d'être enroulée une étoffe (15 ou bien 16) ou bien un matériau analogue, le rouleau et l'étoffe étant disposés de façon qu'ils constituent respectivement un store recouvrant à moitié la plaque d'aspiration,
- aux extrémités de l'étoffe, qui lorsque celle-ci est déroulée se rencontrent dans le milieu de la plaque d'aspiration, est fixé respectivement un rail (17, ou bien 18) qui est relié en tension à l'autre rail au moyen d'un ressort de traction (33),
- des rouleaux (13 et 14) comportent respectivement un entraînement qui agit contre l'action du ressort de traction (33).

2. Dispositif selon la revendication 1, caractérisé en ce qu'il est prévu un moyen de mesure (23) déterminant la largeur du matériau en film, et qui est relié à l'entraînement des rouleaux, le store étant fermé lors de l'arrivée du matériau en film, tandis qu'après cette arrivée du matériau en film, le store est ouvert par le dispositif de mesure pour autant que les rails recouvrent le bord du matériau en film.

3. Dispositif selon la revendication 1, caractérisé en ce qu'à l'une des extrémités de la plaque d'aspiration, à laquelle sont disposés les rouleaux (10) qui tendent le matériau en film et qui le transporte plus loin, il est prévu un moyen un poinçonnage (21) pour obtenir une performation de repèrage du film, les poinçons de ce moyen de poinçonnage restant dans les trous ainsi poinçonnés pendant l'exposition du film.

4. Dispositif selon la revendication 1, caractérisé en ce qu'à l'intérieur de la cassette après la paire de cylindres prélevant le matériau en film à partir de la cassette et le poussant sur la plaque d'aspiration, il est prévu une autre paire de cylindres (7) non entraînée.

5. Dispositif selon une des revendications 1 à 4, caractérisé en ce que le cylindre entraîné de la paire de cylindres (10) qui tend le matériau en film et qui le transporte plus loin, est constituée par une brosse en velours.

6. Dispositif selon la revendication 5, caractérisé en ce que le cylindre constitué par une brosse a une surface anti-statique.

7. Dispositif selon une des revendications 1 à 6, caractérisé en ce que l'entraînement pour les rouleaux (13, 14) qui enroule ou déroule l'étoffe (15 ou bien 16) est auto-bloquant.

8. Dispositif selon les revendication 1 et 4, caractérisé en ce que la paire de cylindres entraînée (6) qui prélève le matériau en film et qui le pousse plus loin, et la paire de cylindres non entraînée (7) qui achemine le matériau en film de la paire de cylindres entraînée vers la plaque d'aspiration (1), sont disposées à l'intérieur de la cassette avant la sortie de celle-ci.

9. Dispositif selon la revendication 1, caractérisé en ce que sur les étoffes (15 et 16), à l'extrémité frontale de la plaque d'aspiration (1) et à l'extrémité des étoffes, s'appliquent respectivement à plat, deux pièces en tôle (401, 402) ou bien (411, 412) articulées l'une sur l'autre et agissant à la façon de ciseaux, dont l'une est articulée par son extrémité libre à l'extrémité de l'un des deux rails (17 et 18), tandis que l'autre est articulée par son extrémité libre au coin correspondant de la plaque d'aspiration.

10. Dispositif selon la revendication 9, caractérisé en ce qu'une des deux tôles (401 et 411) comporte respectivement un évidement pour le moyen de poinçonnage (21).

Fig. 1

0 152 548

Fig. 2

Fig. 3

19  21  40
14
16
401
17  413
402
171  412
411
181  414
2  5
3  22  4  6  7  8
10
41
13
12
15
18

0 152 548